**Europäisches Patentamt**

**European Patent Office**

**Office européen des brevets**

(19)

(11) Veröffentlichungsnummer: **0 243 718**
**B1**

(12)

# EUROPÄISCHE PATENTSCHRIFT

(45) Veröffentlichungstag der Patentschrift:
04.10.89

(21) Anmeldenummer: 87104911.0

(22) Anmeldetag: 02.04.87

(51) Int. Cl.⁴: **F 16 C 13/00,** B 60 B 33/00

(54) **Bauteil aus einem spritz- oder giessbaren polymeren Werkstoff.**

(30) Priorität: 26.04.86 DE 3614260

(43) Veröffentlichungstag der Anmeldung:
04.11.87 Patentblatt 87/45

(45) Bekanntmachung des Hinweises auf die Patenterteilung:
04.10.89 Patentblatt 89/40

(84) Benannte Vertragsstaaten:
**DE FR GB IT**

(56) Entgegenhaltungen:
**DE-A-3 226 419**
**DE-A-3 401 898**
**GB-A-885 675**
**GB-A-1 320 661**
**US-A-2 755 675**
**US-A-4 168 771**

(73) Patentinhaber: **INA Wälzlager Schaeffler KG,
Industriestrasse 1-3 Postfach 1220, D-8522
Herzogenaurach (DE)**

(72) Erfinder: **Gerhard, Kraus, Bergstrasse 9, D-8521
Aurachtal (DE)**

(74) Vertreter: **Klug, Horst, Dipl.- Ing. (FH), c/o INA
Wälzlager Schaeffler KG Postfach 12 20, D-8522
Herzogenaurach (DE)**

LIBER, STOCKHOLM 1989

## Beschreibung

Die Erfindung betrifft ein Bauteil aus einem spritz- oder gießbaren polymeren Werkstoff, bestehend aus einem äußeren rohrförmigen Abschnitt, einem im wesentlichen konzentrisch zu diesem angeordneten inneren rohrförmigen Abschnitt und beide einstückig miteinander verbindenden im wesentlichen in die Längsachse des Bauteils enthaltenden Ebenen verlaufenden Rippen, wobei der Krümmungsradius eines zwei benachbarte Rippen verbindenden Abschnitts der Bohrungswandung des äußeren rohrförmigen Abschnitts kleiner ist als der Radius des um die Bohrungswandung umschriebenen Kreises.

Solche Bauteile sind aus der FR-A-1 277 806 bekannt und werden z. B. als Laufräder, Riemenscheiben oder Riemenspannrollen verwendet, wobei infolge des Verarbeitungsverhaltens des polymeren Werkstoffs die äußere Mantelfläche des äußeren rohrförmigen Abschnitts, die die Lauffläche des Laufrades, bzw. im Falle von Riemenscheiben- oder Spannrollen die Lauffläche für den Riemen bildet, im Bereich der Einmündung der Rippen einen vergrößerten Durchmesser aufweist, weshalb die in letzter Zeit gestiegenen Anforderungen an die Rundlaufgenauigkeit der genannten Bauteile nicht erfüllt werden können.

Durch die DE-A-3 401 898 ist ein Bauteil bekannt, bei dem dieser Nachteil dadurch vermieden werden soll, daß die Rippen, der äußere und der innere rohrförmige Abschnitt Aussparungen umgrenzen, die kreisförmig oder vieleckig ausgebildet sind. Es hat sich jedoch gezeigt, daß diese Maßnahme allenfalls teilweise zum Erfolg führt. Außerdem ist es nicht oder nur unter erheblichem Aufwand möglich, bereits vorhandene Spritz- oder Gießformen dahingehend zu modifizieren, daß entsprechend der DE-A-3 401 898 ausgebildete Bauteile in diesen hergestellt werden können.

Der Erfindung liegt die Aufgabe zugrunde, ein Bauteil der eingangs genannten Art zu schaffen, das mit Sicherheit eine hohe Rundlaufgenauigkeit aufweist und das in bereits vorhandenen Formen hergestellt werden kann, ohne daß diese kostspieligen Modifikationen unterzogen werden müssen.

Nach der Erfindung wird diese Aufgabe dadurch gelöst, daß die Rippen mit einem Radius in die Bohrungswandung des äußeren rohrförmigen Abschnitts übergehen, der höchstens 50 % des Krümmungsradius des die Radien zweier benachbarter Rippen miteinander verbindenden Abschnitts der Bohrungswandung beträgt.

Die Erfindung macht sich somit die Tatsache zunutze, daß polymere Werkstoffe während ihrer Verarbeitung umsomehr schwinden, je größer ihre Wandstärke ist, das heißt, die an der äußeren Mantelfläche des äußeren rohrförmigen Abschnitts im Bereich der Einmündung der Rippen in dessen Bohrungswandung auftretenden Durchmesservergrößerungen werden dadurch kompensiert, daß das Bauteil in diesem Bereich durch die erfindungsgemäße Ausbildung eine erhöhte Wandstärke aufweist und somit stärker schwindet.

Um erfindungsgemäß ausgebildete Bauteile in bereits vorhandenen Formen herstellen zu können, ist es lediglich erforderlich, diese im Bereich der Einmündung der Rippen in die Bohrungswandung des äußeren rohrförmigen Abschnitts nachzuarbeiten, was auf äußerst kostengünstige Weise möglich ist.

Eine Verbesserung der Rundlaufgenauigkeit ist erzielbar, wenn nach einer Ausführung der Erfindung die Wandstärke der Rippen ausgehend von dem inneren rohrförmigen Abschnitt zu den Radien hin zunimmt.

In den beigefügten Figuren ist ein Ausführungsbeispiel der Erfindung dargestellt. Es zeigen.

Fig. 1 einen teilweisen Längsschnitt durch eine erfindungsgemäß ausgebildete Riemenspannrolle und

Fig. 2 eine teilweise Stirnansicht der erfindungsgemäß ausgebildeten Riemenspannrolle.

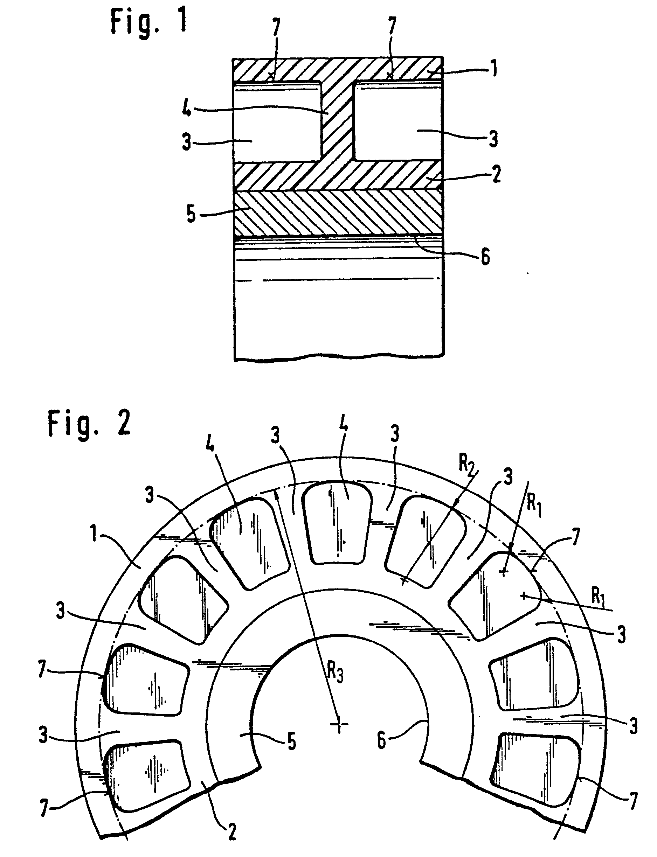

In den Figuren 1 und 2 ist eine erfindungsgemäß ausgebildete Riemenspannrolle gezeigt, die aus einem äußeren rohrförmigen Abschnitt 1, einem im wesentlichen konzentrisch zu diesem angebrachten inneren rohrförmigen Abschnitt 2 und beide einstückig miteinander verbindenden im wesentlichen in die Längsachse der Spannrolle enthaltenden Ebenen verlaufenden Rippen 3 besteht, wobei die äußere Mantelfläche des äußeren rohrförmigen Abschnitts 1 als Lauffläche für den Riemen dient.

Außerdem weist die Spannrolle eine in einer rechtwinklig zu ihrer Längsachse verlaufenden Ebene angeordnete Versteifungswand 4 auf, welche die beiden rohrförmigen Abschnitte 1 und 2 miteinander verbindet und von den Rippen 3 durchsetzt ist. In der Bohrung des inneren rohrförmigen Abschnitts 2 ist eine metallische Hülse 5 angeordnet, deren Bohrung 6 dazu dienen kann, ein Wälzlager aufzunehmen. Unter Umständen kann die Wandung der Bohrung 6 auch unmittelbar als Lauffläche für Walzkörper des die Spannrolle lagernden Wälzlagers dienen oder als äußere Lauffläche eines Gleitlagers ausgebildet sein. Es ist aber auch möglich die Spannrolle mittels der Hülse 5 auf einer drehbar gelagerten Welle zu befestigen.

Wie aus Fig. 2 ersichtlich ist, gehen die Rippen 3 mit einem Radius $R_1$ in die Bohrungswandung 7 des äußeren rohrförmigen Abschnitts 1 über, der erheblich kleiner als der Krümmungsradius $R_2$ des die Radien $R_1$ zweier benachbarter Rippen 3 miteinander verbindenden Abschnitts der Bohrungswandung 7 ist, wobei dessen Krümmungsradius $R_2$ seinerseits kleiner als der Radius $R_3$ des um die Bohrungswandung 7 umschriebenen, in Fig. 2 strichpunktiert eingetragenen Kreises ist.

Wie aus Fig. 2 weiter ersichtlich ist, beträgt der Radius $R_1$, mit dem die Rippen 3 in die Bohrungswandung 7 des äußeren rohrförmigen Abschnitts 1 übergehen, weniger als 50 % des Krümmungsradius $R_2$ des die Radien $R_1$ verbindenden Abschnitts der Bohrungswandung 7, wobei die Wandstärke der Rippen 3 ausgehend von dem inneren rohrformigen Abschnitt 2 zu den Radien $R_1$ hin kontinuierlich zunimmt.

Das gezeigte Ausführungsbeispiel ist nur beispielhaft zu verstehen. So kann z. B. die Hülse 5 entfallen. Außerdem kann die äußere Mantelfläche des äußeren rohrförmigen Abschnitts 1 dem jeweiligen Anwendungsfall entsprechend andersartig als im Ausführungsbeispiel ausgebildet sein. Z. B. kann im Falle der Verwendung des erfindungsgemäßen Bauteils als Riemenscheibe die äußere Mantelfläche eine dem jeweiligen Riemen entsprechende Profilierung aufweisen.

## Patentansprüche

1. Bauteil aus einem spritz- oder gießbaren polymeren Werkstoff, bestehend aus einem äußeren rohrförmigen Abschnitt, einem im wesentlichen konzentrisch zu diesem angeordneten inneren rohrförmigen Abschnitt und beide einstückig miteinander verbindenden im wesentlichen in die Längsachse des Bauteils enthaltenden Ebenen verlaufenden Rippen, wobei der Krümmungsradius ($R_2$) eines zwei benachbarte Rippen verbindenden Abschnitts der Bohrungswandung des äußeren rohrförmigen Abschnitts kleiner ist als der Radius ($R_3$) des um die Bohrungswandung umschriebenen Kreises, dadurch gekennzeichnet, daß die Rippen (3) mit einem Radius ($R_1$) in die Bohrungswandung (7) des äußeren rohrförmigen Abschnitts übergehen, der höchstens 50 % des Krümmungsradius ($R_2$) des die Radien ($R_1$) zweier benachbarter Rippen (3) miteinander verbindenden Abschnitts der Bohrungswandung (7) beträgt.

2. Bauteil nach Anspruch 1, dadurch gekennzeichnet, daß die Wandstärke der Rippen (3) ausgehend von dem inneren rohrförmigen Abschnitt (2) zu den Radien ($R_1$) hin zunimmt.

## Claims

1. Component made of an injected or moulded polymeric material, consisting of an outer tubular section, an inner tubular section arranged essentially concentrically with the outer tubular section and ribs integrally joining the two sections with one another and running essentially in planes containing the longitudinal axis of the construction part, wherein the radius of curvature ($R_2$) of a part of the bore wall of the outer tubular section connecting two adjacent ribs is smaller than radius ($R_3$) of the circle circumscribed around the bore wall, characterized in that the ribs (3) merge into the bore wall (7) of the outer tubular section with a radius ($R_1$) which is at the most, 50 % of the radius of curvature ($R_2$) of the part of the bore wall (7) connecting the radii ($R_1$) of two adjacent ribs (3) with one another.

2. Component according to claim 1, characterized in that the wall thickness of the ribs (3) starting from the inner tubular section (2), increases twowards the radii ($R_1$).

## Revendications

1. Elément de construction en matériau polymère injecté ou moulé, comportant un tronçon tubulaire extérieur, un tronçon tubulaire intérieur, essentiellement concentrique au tronçon extérieur, et des nervures reliant les deux tronçons l'un à l'autre, d'un seul tenant et s'étendant essentiellement dans des plans contenant l'axe longitudinal de l'élément de construction, le rayon de courbure ($R_2$) d'une partie de la paroi d'alésage du tronçon tubulaire extérieur reliant deux nervures voisines l'une à l'autre étant plus petit que le rayon ($R_3$) du cercle circonscrit à la paroi d'alésage, caractérisé en ce que les nervures (3) sont raccordées à la paroi d'alésage (7) du tronçon tubulaire extérieur avec un rayon ($R_1$) qui s'élève tout au plus a 50 % du rayon de courbure ($R_2$) de la partie de la paroi d'alésage (7) reliant l'un à l'autre les rayons ($R_1$) de deux nervures (3) voisines.

2. Elément de construction suivant la revendication 1, caractérisé en ce que l'épaisseur de paroi des nervures (3) augmente du tronçon tubulaire intérieur (2) vers les rayons ($R_1$).

# Fig. 1

# Fig. 2